# DEMANDE DE BREVET EUROPEEN

(11) **EP 1 394 011 A1**
(43) Date de publication de la demande: **03.03.2004**
(21) Numéro de dépôt: 03356124.2
(22) Date de dépôt: 27.08.2003
(51) Int. Cl.: B61K 9/10, B61D 15/10, G01N 29/22

(54) **Appareil pour la détection par ultrasons des défauts dans les rails de chemin de fer**

(30) Priorité: 30.08.2002 FR 0210789
(71) Demandeur: Metalscan, 71100 Chalon sur Saone (FR)
(72) Inventeur: Cence, Mario, 71390 Saint Vallerin (FR)
(74) Mandataire: Bratel, Gérard

(57) **Abrégé**

Cet appareil manuel effectue le contrôle simultané des deux rails (2, 3) d'une voie ferrée, en vue de la détection par méthode ultrasonore de défauts de surface et/ou internes de ces rails. Il possède un châssis (4), à structure flexible et/ou articulée, à la base duquel sont montées quatre roues tournantes porteuses profilées (5), qui roulent sur les deux rails (2, 3) de la voie ferrée. Dans la partie inférieure du châssis (4) sont suspendus deux chariots porte-sondes (23), qui prennent place de chaque côté de l'appareil entre les roues porteuses (5), au-dessus de l'un des rails (2, 3). Chaque chariot (23), lui-même pourvu de roues de guidage, porte au moins un traducteur ultrasonore (27) à élément piézo-électrique, relié à des moyens émetteurs et/ou récepteurs d'ondes ultrasonores (18).

## Description

La présente invention concerne le contrôle par ultrasons des rails de chemin de fer, en vue de la détection de défauts de surface et/ou internes de ces rails. Plus particulièrement, cette invention se rapporte à un appareil qui permet l'auscultation, par méthode ultrasonore, simultanément des deux rails d'une voie ferrée, en vue de la détection de tels défauts.

Il est souvent nécessaire, dans le domaine de l'exploitation des réseaux ferroviaires, de contrôler l'état interne ou externe des rails, en vue de la détection d'éventuels défauts. Ce contrôle est réalisé à l'aide de dispositifs à ultrasons, du type "canne d'auscultation", qui travaillent soit sur un seul rail d'une voie ferrée, soit simultanément sur les deux rails de la voie ferrée concernée.

A cet effet, des locomotives munies de sondes ultrasonores effectuent régulièrement des contrôles, simultanément sur les deux rails d'une voie ferrée. Ces engins d'auscultation sont munis de patins ou platines dans lesquels sont insérés des sondes ou des traducteurs ultrasonores, ainsi déplacés au-dessus des rails à ausculter. Pour assurer le couplage acoustique entre les sondes ultrasonores et les rails, on utilise ici généralement un liquide, par exemple de l'eau. Des systèmes d'acquisition rapides enregistrent les signaux ultrasonores, réfléchis par les défauts éventuels des rails. Ces systèmes d'acquisition sont, en général, soit des micro-ordinateurs incluant des cartes électroniques d'acquisition multivoies, soit des postes multivoies ou monovoie.

Sur les voies ferrées difficilement accessibles aux locomotives d'auscultation, on réalise généralement les contrôles des rails au moyen d'outillages manuels qui travaillent sur un seul rail à la fois, ce qui nécessite d'effectuer deux passages successifs pour l'auscultation d'une voie complète, c'est-à-dire de ses deux rails. On connaît aussi des matériels manuels qui permettent un contrôle simultané, donc en un seul passage, des deux rails d'une voie ferrée, mais ces matériels sont en général rigides, très encombrants et lourds, avec un poids supérieur à 20 kilogrammes, ce qui rend difficile leur mise en place sur un tronçon de voie ferrée à contrôler, et leur retrait de ce tronçon de voie après achèvement du contrôle. Ces opérations de manutention nécessitent donc l'intervention de plusieurs personnes, ne serait-ce qu'en raison de la réglementation relative au maniement de charges lourdes, et demandent un certain temps pour leur réalisation.

Par ailleurs, les sondes ultrasonores actuelles utilisent des céramiques piézo-électriques circulaires, en général mal adaptées à la détection des défauts déportés.

Enfin, les dispositifs d'auscultation existants sont en général munis de chariots porte-sondes qui s'adaptent au profil de la voie ou du rail, mais qui ne permettent pas de franchir les appareils de voie, tels que les aiguillages complexes. En effet, ces chariots porte-sondes sont fixés rigidement, notamment à un châssis lui-même rigide, et il n'est prévu aucun moyen permettant de les relever rapidement pour éviter leur détérioration au passage des aiguillages.

La présente invention vise à éviter ces inconvénients, et elle a donc pour but de fournir un dispositif de contrôle ultrasonore de type manuel, capable d'ausculter simultanément les deux rails d'une voie ferrée, qui soit léger et maniable, et puisse être ainsi facilement et rapidement mis en place ou retiré, même par un seul opérateur, tout en assurant de façon efficace la détection des défauts des rails par méthode ultrasonore, même en cas de défauts décentrés.

A cet effet, l'invention a essentiellement pour objet un appareil pour la détection par ultrasons des défauts dans les rails de chemin de fer, plus particulièrement un appareil manuel pour le contrôle simultané des deux rails d'une voie ferrée, en vue de la détection par méthode ultrasonore de défauts de surface et/ou internes de ces rails, l'appareil étant caractérisé par le fait qu'il possède un châssis à structure flexible et/ou articulée, à la base duquel sont montées quatre roues tournantes porteuses profilées, soit sur chaque côté du châssis deux roues profilées, prévues pour rouler sur les deux rails d'une même voie ferrée, le châssis portant, suspendus dans sa partie inférieure, deux platines ou chariots porte-sondes placés respectivement sur chacun de ses deux côtés, entre les deux roues porteuses profilées situées de ce côté, de manière à prendre place au-dessus de l'un des deux rails, chaque platine ou chariot porte-sondes portant au moins un traducteur ultrasonore, possédant au moins un élément piézo-électrique, et relié à des moyens émetteurs et/ou récepteurs d'ondes ultrasonores.

Dans une forme de réalisation préférée de l'invention, le châssis de l'appareil, à structure flexible et/ou articulée, comprend deux cadres latéraux, symétriques l'un de l'autre, reliés à leur partie inférieure par au moins une barre transversale munie d'un dispositif de réglage ou d'un tronçon élastique, pour maintenir à un écartement adapté les roues porteuses profilées.

Avantageusement, les quatre roues porteuses profilées de l'appareil, montées librement tournantes autour d'axes horizontaux, possèdent chacune un corps tronconique, prévu pour prendre appui et rouler sur la face supérieure d'un rail de la voie ferrée, et un flanc lui aussi tronconique, prévu pour prendre appui contre un côté de la tête du rail.

Ainsi, l'appareil objet de l'invention se présente comme un chariot, muni de quatre roues porteuses profilées qui lui permettent de circuler sur les deux rails d'un tronçon de voie ferrée, en étant pressées élastiquement contre ces rails, le chariot s'adaptant aux variations d'écartement des rails et n'étant pas gêné, dans ses déplacements, au passage des aiguillages ou par la présence de systèmes mécaniques, électroniques ou autres, nécessaires à la circulation des trains sur la voie ferrée. La flexibilité du châssis de l'appareil, notamment dans sa partie basse, lui permet de s'adapter à la largeur de la voie ferrée en acceptant même de fortes variations d'écartement, et de circuler sur cette voie, en marche avant ou en marche arrière, sans se mettre "en crabe" ou se bloquer sur la voie, même sur des voies à fort rayon de courbure ou à dévers prononcé. L'appareil permet ainsi de positionner et de déplacer, au-dessus des deux rails de la voie, les deux platines ou chariots porte-sondes, suspendus librement à son châssis, pour contrôler de façon simultanée l'état des deux rails de cette voie, depuis la face supérieure (aussi désignée comme "table de roulement") de ces rails. Le montage suspendu des platines ou chariots porte-sondes, combiné à la flexibilité du châssis, permet aussi de suivre au mieux les rails, pour une détection optimale des défauts de tout type.

Le châssis de l'appareil porte avantageusement dans sa partie supérieure, à l'avant et à l'arrière, des barres horizontales de poussée ou traction de l'appareil, qui permettent à l'opérateur de déplacer cet appareil le long de la voie ferrée, en le poussant ou en le tirant.

De préférence, le châssis de l'appareil comporte aussi, dans sa partie basse, des poignées latérales de transport, grâce auxquelles l'appareil peut être aisément transporté, et rapidement mis en place sur la voie ferrée ou dégagé de cette voie, par deux opérateurs. Selon un mode de réalisation perfectionné, le châssis de l'appareil est en outre muni, dans sa partie basse et notamment sur un côté, d'au moins une roue escamotable, qui est utilisable pour le transport de l'appareil avec roulage sur le sol. Ainsi, l'appareil (dégagé des rails) peut être aisément déplacé par un seul opérateur, à la manière d'une brouette, en utilisant les deux poignées de transport situées d'un côté, et la roue escamotable déployée, située sur le côté opposé du châssis.

Selon une autre caractéristique, l'appareil possède, dans sa partie supérieure, un plateau horizontal prévu pour recevoir au moins une partie de l'appareillage de mesure ultrasonore, en particulier au moins un échographe, relié aux traducteurs ultrasonores. Le châssis de l'appareil peut aussi porter, dans sa partie basse, un coffret de servitude apte à recevoir une autre partie de l'appareillage de mesure ultrasonore, et/ou des équipements et accessoires divers, tels que batteries d'alimentation électrique (nécessaires à l'appareillage de mesure), parties électroniques, pièces de rechange et de maintenance, ainsi qu'outillages.

Par ailleurs, le châssis de l'appareil peut porter au moins un réservoir apte à être rempli d'un liquide, utilisable principalement comme liquide de couplage acoustique entre les traducteurs ultrasonores et les faces supérieures des rails, et pouvant servir accessoirement à lester l'appareil.

En ce qui concerne les deux platines ou chariots porte-sondes dans un mode de réalisation préférée, chacun possède un corps allongé horizontalement, muni à ses extrémités de roues de guidage prévues pour rouler sur le rail correspondant, la partie centrale du chariot porte-sondes, située entre les deux roues de guidage, portant le ou les traducteurs ultrasonores.

Selon un mode d'exécution avantageux, les roues de guidage des chariots porte-sondes comprennent, chacune, au moins un galet aimanté prévu pour assurer un contact permanent avec la face supérieure du rail correspondant, et une partie tronconique prévue pour rouler sur le côté de la tête de ce rail.

De plus, pour assurer la pression et le positionnement des traducteurs ultrasonores sur les rails correspondants, il est prévu que le ou chaque traducteur ultrasonore est monté sur le corps du chariot au moyen de porte-sondes, que des moyens à ressort, tels que des lames de ressort, sont prévus pour exercer une pression sensiblement constante sur le traducteur ultrasonore, et que des moyens sont prévus pour le réglage de la position transversale de ce traducteur ultrasonore, notamment pour le centrage dudit traducteur relativement au rail.

Toutefois, pour éviter une usure trop rapide des traducteurs ainsi pressés contre les rails, une membrane de protection est avantageusement disposée sous le ou les traducteurs ultrasonores de chaque chariot porte-sondes, de manière à s'intercaler, en cours d'utilisation de l'appareil, entre le ou les traducteurs et la face supérieure du rail.

La transmission des ultrasons entre la membrane de protection des traducteurs et le rail étant assurée par un liquide de couplage tel que de l'eau, le déplacement des chariots porte-sondes le long des deux rails de la voie ferrée permet de détecter, suivant différentes incidences de propagation, des discontinuités éventuelles dans la matière des rails ou à la surface des rails, ces discontinuités étant considérées comme des "défauts". L'utilisation de céramiques piézo-électriques de forme rectangulaire permet une détection de défauts sur une largeur conséquente, sur le champignon du rail.

De préférence, l'appareil comprend encore, associé à l'une de ses roues porteuses profilées, un capteur de déplacement, notamment du genre codeur, qui permet l'enregistrement de la position des défauts détectés, de manière à localiser ces défauts.

Enfin, l'appareil peut comporter des moyens actionnables manuellement, tels qu'à tringlerie ou à câble, pour remonter temporairement les chariots porte-sondes, relativement au châssis, en le soulevant ainsi des rails, par exemple pour le passage des aiguillages de la voie ferrée sans risque de détérioration des membranes et supports, ou encore pour éviter tout contact avec les rails, donc toute usure, lors d'un déplacement de l'appareil sur les rails sans réalisation de contrôle ultrasonore. Naturellement, cette dernière disposition est autorisée par le montage suspendu des chariots porte-sondes.

Dans l'ensemble, on obtient ainsi un appareil pour la détection par ultrasons des défauts dans les rails de chemin de fer, qui possède les avantages suivants :

Ce appareil reste simple, léger et compact, tout en étant stable et maniable sur les rails, dans les deux directions de déplacement. Si nécessaire, le poids de l'appareil peut être augmenté en remplissant d'eau son ou ses réservoirs, de manière à augmenter la pression de ses roues porteuses sur les rails, l'eau du ou des réservoirs étant aussi utilisée comme liquide de couplage acoustique, pour la transmission des ultrasons dans les rails.

La légèreté de l'appareil, et les moyens prévus pour son transport (poignées et roue escamotable), permettent une amenée aisée et rapide sur le lieu d'utilisation, ainsi qu'une mise en place rapide sur les rails et un dégagement tout aussi rapide de ces rails, notamment en moins de dix secondes et par un seul opérateur, ce qui était impossible avec les matériels utilisés jusqu'à présent.

Par ailleurs, les chariots porte-sondes avec traducteurs ultrasonores sont positionnés et guidés avec précision sur les deux rails, sur lesquels ils reposent par leur propre poids, en étant appliqués sur ceux-ci avec une pression adaptée, et avec interposition du liquide de couplage, de manière à suivre fidèlement les deux rails et à permettre ainsi une auscultation simultanée des deux rails d'une même voie ferrée, sans déperdition des signaux ultrasonores. La détection des défauts s'effectue ainsi de façon précise, les erreurs de mesure étant négligeables, et la fiabilité et la reproductibilité du contrôle des rails sont pleinement assurées. En un seul passage il devient possible de détecter des défauts centrés et des défauts décentrés du champignon de chacun des deux rails.

Enfin, grâce à son coffret de servitude convenablement garni, l'appareil se trouve entièrement équipé pour un fonctionnement autonome.

En résumé, l'invention fournit donc un appareil ergonomique et fiable, qui facilite de façon significative le travail de l'opérateur, pour le contrôle simultané des deux rails de la même voie ferrée.

L'invention sera mieux comprise à l'aide de la description qui suit, en référence au dessin schématique annexé représentant, à titre d'exemple, une forme d'exécution de cet appareil pour la détection par ultrasons des défauts dans les rails de chemin de fer :
Figure 1 est une vue d'ensemble de face, d'un appareil conforme à la présente invention, placé sur les deux rails d'une voie ferrée ;
Figure 2 est une vue de côté de l'appareil montré sur la figure 1 ;
Figure 3 est une vue en plan par-dessus de cet appareil;
Figure 4 est une vue de détail de côté, à échelle agrandie, d'un chariot porte-sondes de l'appareil objet de l'invention ;
Figure 5 est une vue en plan par-dessus du chariot porte-sondes de la figure 4;
Figure 6 est une vue en bout de ce chariot porte-sondes, montrant plus particulèrement ses roues de guidage.

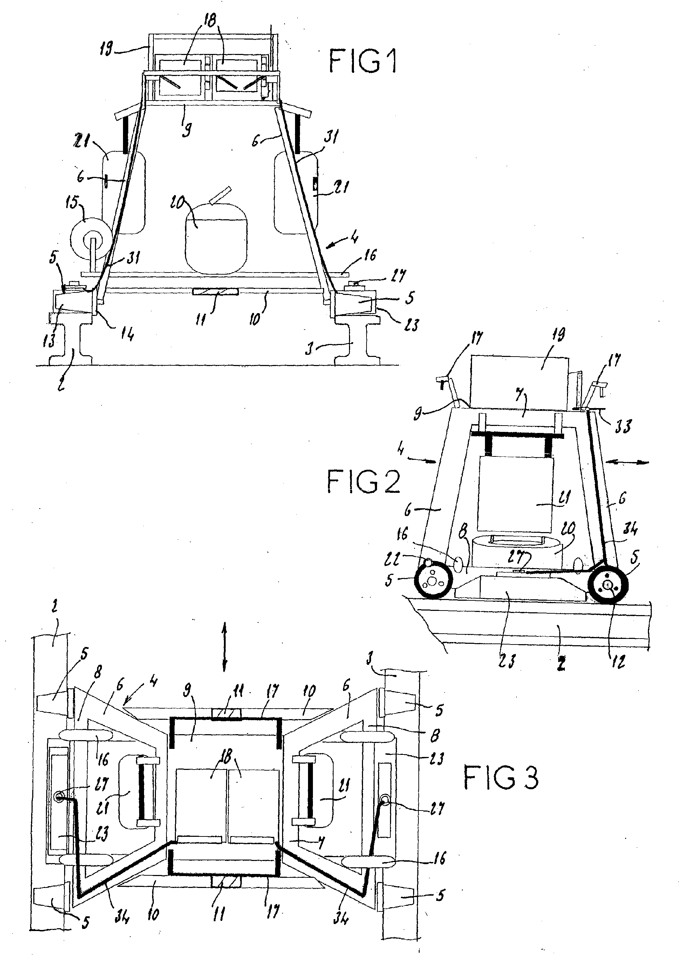

En se référant d'abord aux figures 1 à 3, l'appareil objet de l'invention est destiné au contrôle de l'état interne et/ou externe des deux rails 2 et 3 d'une voie ferrée. Cet appareil possède un châssis 4, ayant la forme générale d'un "U" renversé, à la base duquel sont montées au total quatre roues porteuses profilées 5, soit sur chaque côté du châssis 4 deux roues 5, situées aux angles du châssis 4 (vu par-dessus) et prévues pour reposer et rouler sur l'un des deux rails 2 et 3.

Dans le détail, le châssis 4, réalisé en métal ou en matière plastique, possède une structure monobloc flexible ou une structure articulée, avec de chaque côté un cadre composé de deux montants obliques 6 reliant les extrémités d'une barre horizontale supérieure 7, et aussi les extrémités d'une barre horizontale inférieure 8. Les parties supérieures des deux cadres latéraux sont réunies par un plateau horizontal 9, recevant des appareillages de mesure. Les parties inférieures de ces deux cadres latéraux sont reliées par des barres transversales 10, munies d'un dispositif de réglage ou d'un tronçon élastique 11 qui maintient un écartement adapté des roues 5.

Les roues porteuses 5, situées aux quatre angles du châssis 4, à la base des cadres latéraux, sont des roues profilées montées librement tournantes sur des axes horizontaux 12, de direction orthogonale à la direction longitudinale des rails 2 et 3. Chaque roue 5 possède un corps tronconique 13, destiné à prendre appui et à rouler sur la face supérieure du rail 2 ou 3, et un flanc 14 lui aussi tronconique prévu pour prendre appui contre le côté de la tête du rail 2 ou 3, plus particulièrement le côté "intérieur". Les quatre roues 5 sont soumises, au moyen des barres transversales 10, à une pression élastique les maintenant appuyées sur les rails 2 et 3. Ces roues 5 sont aussi isolées électriquement, pour éviter le passage d'un courant électrique entre les deux rails 2 et 3 en cours de contrôle, à moins que le châssis 4 soit lui-même réalisé en matière isolante, en particulier en matière plastique.

Le châssis 4 porte encore dans sa partie inférieure une roue escamotable 15, placée du côté droit ou gauche, pour le transport de l'appareil avec roulage sur le sol, lorsqu'il n'est pas en place sur les rails 2 et 3. Des poignées latérales de transport 16 sont aussi prévues dans la partie basse de l'appareil, notamment deux poignées 16 placées de chaque côté du châssis 4.

Dans sa partie supérieure, à l'avant et à l'arrière, le châssis 4 porte des barres horizontales 17 de poussée ou de traction de l'appareil.

Sur le plateau supérieur 9, sont posés et fixés un ou plusieurs échographes 18, recouverts par un capot de protection 19, l'échographe 18 pouvant servir accessoirement à tester l'appareil.

Dans sa partie basse, le châssis 4 porte un coffret de servitude 20, avec poignée, qui peut contenir des batteries pour l'alimentation électrique de l'appareil, des parties électroniques telles qu'un micro-calculateur ou un système d'impression ou de traitement des données en temps réel, des pièces de rechange et de première maintenance et des outillages adaptés aux opérations de maintenance, des accessoires tels qu'une lampe utilisable lors de la traversée des tunnels, etc...

Le châssis 4 porte encore, respectivement sur ses deux côtés, deux réservoirs 21 prévus pour être remplis de liquide, en particulier d'eau éventuellement additionnée de produits mouillant et antigel. Ce liquide sert à la fois de lest pour l'appareil, augmentant la pression d'appui des roues porteuses 5 sur les rails 2 et 3, et de liquide de couplage pour les dispositifs ultrasonores (voir ci-après).

A l'une des roues 5, il est associé un capteur de déplacement 22, du genre codeur, permettant de mesurer le déplacement de l'appareil le long de la voie ferrée, et d'enregistrer des données telles que le point décamétrique ou kilométrique associé à un défaut détecté du rail 2 ou 3. A cet effet, le capteur de déplacement 22 est relié au micro-calculateur précédemment mentionné.

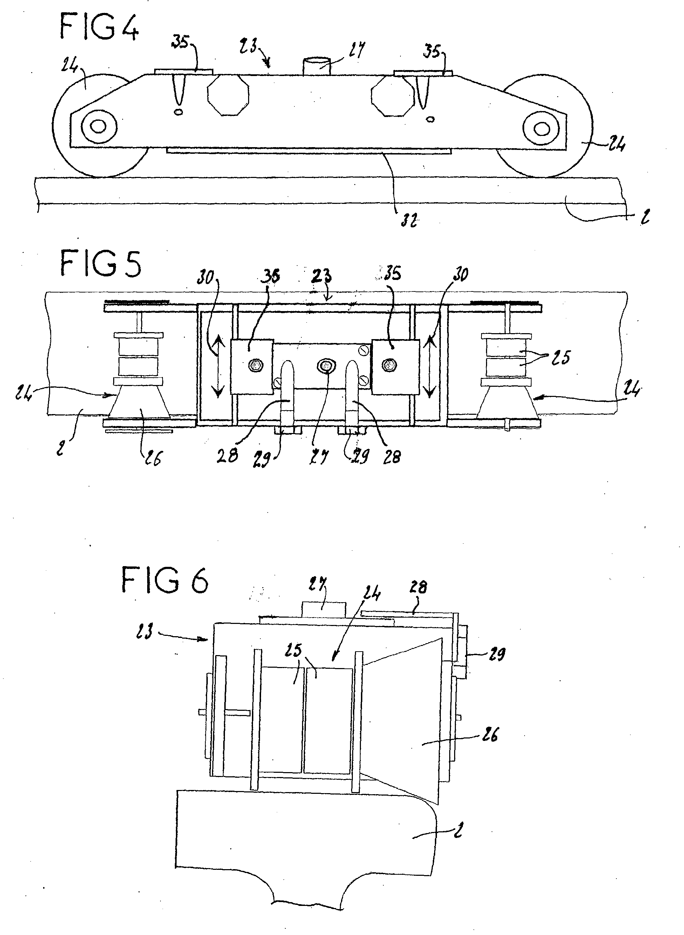

Sur chaque côté du châssis 4, dans la partie basse de celui-ci, est monté un chariot porte-sondes 23, qui prend place entre les deux roues profilées 5, au-dessus du rail 2 ou 3 en cours de contrôle. Les figures 4 à 6 montrent le détail de l'un des deux chariots porte-sondes 23.

Chaque chariot porte-sondes 23 possède une forme allongée horizontalement, et il est monté sous la barre inférieure 8 du cadre du châssis 4 situé du même côté. Ce montage du chariot porte-sondes 23 est réalisé par l'intermédiaire d'une suspension libre, élastique ou à cardan (non représenté) reliant ce chariot 23 au châssis 4 avec un débattement vertical et transversal.

Chaque chariot porte-sondes 23 est muni de deux roues de guidage 24, situées à ses extrémités et prévues pour rouler sur le rail 2 ou 3 correspondant. Comme le montre la figure 6, chaque roue de guidage 24 comprend des galets aimantés 25, qui assurent un contact permanent avec la face supérieure du rail 2 ou 3, et une partie tronconique 26, qui roule sur le côté de la tête du rail 2 ou 3.

Dans sa partie centrale, entre les deux roues de guidage 24, chaque chariot porte-sondes 23 porte un traducteur ultrasonore 27 mono ou multi-canaux, par exemple un traducteur du type dit "triple canne" (à trois voies de contrôle). Le traducteur 27 est monté sur le corps du chariot 23 par l'intermédiaire de porte-sondes 35, tandis que des lames de ressort 28, tenues par des organes de fixation 29, assurent une pression constante du traducteur 27 sur le rail 2 ou 3. La position de ce traducteur 27 est aussi réglable transversalement, comme indiqué par les flèches 30 de la figure 5, notamment pour lui permettre de se centrer sur l'âme du rail 2 ou 3.

Les traducteurs 27 sont reliés à l'appareillage de mesure, notamment aux échographes 18, par des câbles électriques 31 qui peuvent être fixés sur les montants 6 du châssis 4 (voir figure 1).

En se référant de nouveau à la figure 4, une membrane de protection 32 de fine épaisseur, par exemple en caoutchouc, est disposée sous le traducteur 27 de chaque chariot porte-sondes 23, et s'intercale donc entre ce traducteur 27 et la surface supérieure du rail 2 ou 3, ceci pour éviter une usure trop rapide du traducteur 27 au niveau de sa zone de contact avec le rail 2 ou 3. Le couplage acoustique entre le traducteur 27 et la membrane de protection 32 est assuré par de l'huile, sans perte de signal. Le couplage acoustique entre la membrane de protection 32 et la surface du rail 2 ou 3 est assuré par un liquide, tel que de l'eau, en particulier en provenance de l'un ou l'autre des réservoirs 21, amenée par des conduits (non représentés), avec un robinet autorisant l'arrivée du liquide vers les chariots porte-sondes 23.

En se référant de nouveau aux figures 2 et 3, l'appareil comprend encore, dans sa partie supérieure, des leviers 33 qui, par l'intermédiaire d'une tringlerie 34, permettent de remonter rapidement les chariots porte-sondes 23, soit pour permettre le passage aisé des aiguillages ou autres obstacles, soit pour éviter l'usure de ces chariots porte-sondes 23 lorsqu'il n'est pas procédé à un contrôle ultrasonore. En variante (non représentée) un dispositif de relevage des chariots 23 par câble, relié à une poignée ou autre manette adaptée, peut aussi être utilisé.

Pour l'utilisation de l'appareil précédemment décrit, l'opérateur remplit préalablement au moins l'un des réservoirs 21 avec le liquide approprié, tel que de l'eau additionnée d'un produit mouillant et antigel. Une fois amené (sur un véhicule) sur son lieu d'utilisation, l'appareil est déchargé de ce véhicule et déplacé seul au sol, à la manière d'une brouette, grâce à sa roue escamotable 15, alors déployée. Ensuite, l'appareil est posé sur le tronçon de voie ferrée à ausculter, en s'aidant des poignées 16, ses roues profilées 5 étant placées sur les rails 2 et 3, de même que les roues de guidage 24 de deux chariots porte-sondes 23. Le robinet d'arrivée d'eau est manoeuvré pour permettre l'écoulement du liquide contenu dans le réservoir 21, de sorte que ce liquide s'écoule goutte à goutte sur l'avant de chaque chariot porte-sondes 23. Tous les appareillages électroniques de mesure ultrasonore sont aussi mis sous tension, par un commutateur (non représenté), de manière à activer notamment les traducteurs 27.

L'opérateur pousse ensuite l'appareil le long de la voie ferrée, ou il tire l'appareil, en le tenant par l'une des barres 17 de poussée ou de traction, de manière à faire rouler l'appareil, par ses quatre roues profilées 5, sur les deux rails 2 et 3, à une vitesse sensiblement uniforme ou au contraire variable.

Au cours de ce déplacement de l'appareil, chaque chariot porte-sondes 23 se déplace lui-même, en étant guidé par ses propres roues 24, le long du rail correspondant 2 ou 3. L'auscultation des deux rails 2 et 3 s'effectue ainsi de façon simultanée, au moyen des traducteurs 27 déplacés au-dessus de ces rails, par émission et réception d'ondes ultrasonores dans une gamme de fréquence pouvant être comprise entre 0 et 20 Mhz.

Chaque échographe 18, muni d'au moins un émetteur/récepteur ultrasonore et relié par le câble 31 au transducteur 27 correspondant, assure l'enregistrement et la mémorisation des données, en coopération avec le micro-calculateur embarqué, au cours du déplacement de l'appareil sur la voie ferrée. En cas de détection d'un défaut, un signal sonore et/ou visuel d'indication de défaut est émis, selon la position d'un commutateur (non représenté). Un enregistrement de la position des défauts détectés est effectué à l'aide du micro-calculateur, relié à l'échographe 18 et au capteur de déplacement 22.

Après son utilisation, l'appareil peut être dégagé de la voie ferrée, par un seul opérateur, en moins de dix secondes, puis l'appareil peut être éloigné en réutilisant la roue escamotable 15, déployée à cet effet.

L'on ne s'éloignerait pas du cadre de l'invention, telle que définie par les revendications annexées :
- en modifiant les détails constructifs du châssis de l'appareil, par exemple en simplifiant le châssis par une réduction du nombre de barres transversales prévues à la base de ce châssis, la rigidité de l'ensemble et son ergonomie pouvant toutefois être réduites par une telle modification ;
- en divisant le châssis en deux ou plusieurs parties, ou en le rendant démontable ou modulable par assemblage d'éléments constitutifs, pour faciliter encore davantage le transport et le rangement de l'appareil ;
- en multipliant les traducteurs placés sur les chariots porte-sondes, ou en utilisant des traducteurs multi-éléments ;
- en modifiant les dimensions et la forme des céramiques piézo-électriques des traducteurs ultrasonores embarqués sur les platines ou chariots suspendus ;
- en embarquant sur l'appareil un ou plusieurs échographes, ou un poste adapté d'émetteur/récepteur, multiplexés ou fonctionnant en émission et réception simultanées ;
- en utilisant, en relation avec l'électronique embarquée, tout mode de fonctionnement des traducteurs ultrasonores (balayage, focalisation, génération d'ondes ultrasonores multi-directionnelles, etc...) ;
- en ajoutant tous équipements ou accessoires, utiles au fonctionnement ou à la maintenance de l'appareil ;
- en utilisant l'appareil pour l'auscultation des rails de voies ferrées de tout type : voies ordinaires, lignes à grandes vitesse, métro, rails pour tramway, etc...

## Revendications

1. Appareil pour la détection par ultrasons des défauts dans les rails de chemin de fer, plus particulièrement appareil manuel pour le contrôle simultané des deux rails d'une voie ferrée, en vue de la détection par méthode ultrasonore de défauts de surface et/ou internes de ces rails, **caractérisé en ce** **qu**'il possède un châssis (4) à structure flexible et/ou articulée à la base duquel sont montées quatre roues tournantes porteuses profilées (5), soit sur chaque côté du châssis (4) deux roues profilées (5), prévues pour rouler sur les deux rails (2, 3) d'une même voie ferrée, le châssis (4) portant, suspendus dans sa partie inférieure, deux platines ou chariots porte-sondes (23) placés respectivement sur chacun de ses deux côtés, entre les deux roues porteuses profilées (5) situées de ce côté, de manière à prendre place au-dessus de l'un des deux rails (2, 3), chaque platine ou chariot porte-sondes (23) portant au moins un traducteur ultrasonore (27), possédant au moins un élément piézo-électrique, et relié à des moyens émetteurs et/ou récepteurs d'ondes ultrasonores (18).

2. Appareil selon la revendication 1, **caractérisé en ce que** son châssis (4), à structure flexible et/ou articulée, comprend deux cadres latéraux, (6, 7, 8) symétriques l'un de l'autre, reliés à leur partie inférieure par au moins une barre transversale (10) munie d'un dispositif de réglage ou d'un tronçon élastique (11), pour maintenir à un écartement adapté les roues porteuses profilées (5), montées à la base des cadres latéraux (6, 7, 8).

3. Appareil selon la revendication 1 ou 2, **caractérisé en ce que** ses quatre roues porteuses profilées (5), montées librement tournantes autour d'axes horizontaux (12), possèdent chacune un corps tronconique (13), prévu pour prendre appui et rouler sur la face supérieure d'un rail (2, 3) de la voie ferrée, et un flanc (14) lui aussi tronconique, prévu pour prendre appui contre un côté de la tête du rail (2, 3).

4. Appareil selon l'une quelconque des revendications 1 à 3, **caractérisé en ce que** son châssis (4) porte dans sa partie supérieure, à l'avant et à l'arrière, des barres horizontales (17) de poussée ou traction de l'appareil.

5. Appareil selon l'une quelconque des revendications 1 à 4, **caractérisé en ce que** son châssis (4) comporte, dans sa partie basse sur ses deux côtés, des poignées latérales de transport (16).

6. Appareil selon l'une quelconque des revendications 1 à 5, **caractérisé en ce que** son châssis (4) est muni, dans sa partie basse et notamment sur un côté, d'au moins une roue escamotable (15), utilisable pour le transport de l'appareil avec roulage sur le sol.

7. Appareil selon l'une quelconque des revendications 1 à 6, **caractérisé en ce qu'**il possède, dans sa partie supérieure, un plateau horizontal (9) prévu pour recevoir au moins une partie de l'appareillage de mesure ultrasonore, en particulier au moins un échographe (18), relié (en 31 ) aux traducteurs ultrasonores (27).

8. Appareil selon la revendication 7, **caractérisé en ce que** son châssis (4) porte, dans sa partie basse, un coffret de servitude (20) apte à recevoir une autre partie de l'appareillage de mesure ultrasonore et/ou des équipements et accessoires, tels que batteries d'alimentation électrique, parties électroniques, pièces de rechange et de maintenance, ainsi qu'outillages.

9. Appareil selon l'une quelconque des revendications 1 à 8, **caractérisé en ce que** son châssis (4) porte au moins un réservoir (21) apte à être rempli d'un liquide, tel que de l'eau, utilisable principalement comme liquide de couplage acoustique entre les traducteurs ultrasonores (27) et les faces supérieures des rails (2, 3), et pouvant servir accessoirement à lester l'appareil.

10. Appareil selon l'une quelconque des revendications 1 à 9, **caractérisé en ce que** chaque platine ou chariot porte-sondes (23) possède un corps allongé horizontalement, muni à ses extrémités de roues de guidage (24) prévues pour rouler sur le rail correspondant (2, 3), la partie centrale du chariot porte-sondes (23), située entre les deux roues de guidage (24), portant le ou les traducteurs ultrasonores (27).

11. Appareil selon la revendication 10, **caractérisé en ce que** les roues de guidage (24) des chariots porte-sondes (27) comprennent, chacune, au moins un galet aimanté (25) prévu pour assurer un contact permanent avec la face supérieure du rail correspondant (2, 3), et une partie tronconique (26) prévue pour rouler sur le côté de la tête de ce rail (2, 3).

12. Appareil selon la revendication 10 ou 11, **caractérisé en ce que** le ou chaque traducteur ultrasonore (27) est monté sur le corps du chariot (23) au moyen de porte-sondes (35), **en ce que** des moyens à ressort, tels que lames de ressort (28), sont prévus pour exercer une pression sensiblement constante sur le traducteur ultrasonore (27), et **en ce que** des moyens sont prévus pour le réglage (30) de la position transversale de ce traducteur ultrasonore (27), notamment pour le centrage dudit traducteur (27) relativement au rail (2, 3).

13. Appareil selon l'une quelconque des revendications 10 à 12, **caractérisé en ce qu'**une membrane de protection (32) est disposée sous le ou les traducteurs ultrasonores (27) de chaque chariot porte-sondes (23), de manière à s'intercaler, en cours d'utilisation de l'appareil, entre le ou les traducteurs (27) et la face supérieure du rail (2, 3).

14. Appareil selon l'une quelconque des revendications 10 à 13, **caractérisé en ce que** des moyens (33, 34) actionnables manuellement, tels qu'à tringlerie ou à câble, sont prévus pour remonter temporairement les chariots porte-sondes (23), relativement au châssis (4), en les soulevant ainsi des rails (2, 3), par exemple pour le passage des aiguillages de la voie ferrée.

15. Appareil selon l'une quelconque des revendications 1 à 14, **caractérisé en ce qu'**il comprend encore, associé à l'une de ses roues porteuses profilées (5), un capteur de déplacement (22), notamment du genre codeur, pour l'enregistrement de la position des défauts détectés.
